# EUROPEAN PATENT APPLICATION

(11) **EP 2 400 722 A1**
(43) Date of publication of application: **28.12.2011**
(21) Application number: 10167512.2
(22) Date of filing: 28.06.2010
(51) Int. Cl.: H04L 29/08, E04H 1/12, G07C 9/00, H04L 29/06

(54) **Dynamically-reconfigurable distributed workstation system**

(71) Applicant: Swisscom AG, 3050 Bern (CH)
(72) Inventor: Lehmann, Andreas, 8142 Uitikon Waldegg (CH); Reinhardt, Britta, 4581 Küttigkofen (CH); Isings, Lidewy, 3006 Bern (CH)
(74) Representative: BOVARD AG

(57) **Abstract**

A system and method are described for providing workspace modules, such as transportable office units, at multiple distributed geographical locations. Access to the modules is controlled remotely in dependence upon a user authorisation status, and the workspace facilities of the module are remotely configurable according to predetermined parameters for the individual user or the category of the user.

## Description

The present invention relates to the provision of communications and installations for distributed workstations. In particular, but not exclusively, it relates to the provision and management of temporary of mobile office facilities at a plurality of geographically distributed locations.

Before the advent of portable computing and communications technologies in the 1980s, office work was confined to environments where the necessary equipment and infrastructure was installed, such as computers, telephones and photocopier, and where support services such as switchboard, secretarial and administration staff were available. Working away from the office was not considered a realistic proposition.

This situation changed significantly in the 1990s with the widespread introduction of mobile telephone networks, and with major advances in the internet and in portable computer and telephone handset technologies. It became possible to carry the essentials of an office environment (telephone, laptop computer and possibly a miniature printer) in a briefcase, which enabled people to work while travelling, or while at a location remote from the office. By the turn of the millennium, the feasibility of remote or mobile working had become accepted by most organisations. Telephone systems allowed calls to be seamlessly transferred between disparate communications networks, email permitted instant written communication, and telephone-conferencing, video-conferencing and webcasting allowed meetings and presentations to be held between participants at geographically distributed locations. More recently, the growth in cloud computing, together with greatly improved internet connection speeds, has enabled the provision of virtual office environments in which all the necessary software, data and support services can be accessed remotely via a browser on a laptop or a hand-held device, for example.

The "mobile office" has its disadvantages, however, and the practical problems of working remotely or on the move are well known to the seasoned business traveller. There are many conditions which must be satisfied to ensure an effective working environment, for example: batteries must be charged, mains electricity must be accessible, power adaptors must fit, connection wires must be available, GSM network coverage must be adequate and compatible, internet access must be secure enough and fast enough and permit VPN tunnelling or VoIP protocols, and so on. A problem with any of these can result in sub-optimal or impossible working conditions.

Public places such as railway stations, trains, cafés, hotel rooms and airports often provide wireless internet access, but such wireless internet access can be patchy or expensive, and may take significant time to set up. Furthermore, some public WLAN access is insecure and open to cyber-snooping. Using computers or mobile telephones in public spaces may therefore increase the risk of unauthorised access via Bluetooth or WLAN, for example, or by being overheard or observed. Special precautions must be taken to prevent the theft of data and equipment, and to prevent unauthorised access to information.

In addition, when using several discrete pieces of portable equipment and one or more servers, provision must be made for synchronising and backing up data between the portable devices and with servers.

A significant quantity of portable equipment is required in order to reproduce an effective remote office environment, such as a computer, printer, scanner, fax, webcam and telephone. A suitable work-surface, such as a desk, and seating arrangement is required, as well as a sufficiently private and quiet space in which to work undistracted.

It has been proposed to install privacy modules in public places such as exhibitions, airports and the like. British patent application GB2267916A, for example, describes an enclosure designed to provide comfort, quiet and privacy for one or more people while telephoning, working or watching television. The module can be freely entered through an opening in the wall of the module.

United States patent application US2004/0003545 describes a largely self-contained modular office cubicle which can be used in an office environment thereby giving the occupant of each module local control of parameters such as heating and lighting within the individual module. The module may be constructed from several components which may be disassembled when the module is to be moved, or the module may be moved whole on a wheeled platform. The cubicle is for use in an enclosed, controlled office environment comprising multiple such cubicles, and is not suitable for installing as a standalone unit in a public space.

United States patent application US2002/0100634 describes an enclosed modular office cubicle which is equipped with various sound-absorbing means designed to improve the working environment by reducing the amount of ambient noise. The cubicle is also not suitable for installing as a standalone unit in a public space, since it is designed for use in an enclosed, controlled office environment where many such cubicles are to be installed in close proximity.

The object of the present invention is to overcome the above and other disadvantages with the prior art. In particular, it is an object of the invention to provide a system for providing workspace modules at a plurality of geographically-distributed installation sites such that each installed workspace module is accessible for use by a plurality of pre-authorised users, the system comprising
a plurality of pre-fabricated, transportable workspace modules,
module distribution means for allocating and transporting each of at least a subset of said plurality of workspace modules to an installation site, and installing each allocated and transported workspace module at the said installation site,
module access control means for monitoring and controlling access to installed workspace modules,
module configuration control means for configuring each installed workspace module, according to a predetermined configuration profile for a user, for each usage of said each module by the said user, and
system management means for controlling the operation of the module distribution means the module access control means and the module configuration control means;
wherein each workspace module comprises
a workspace enclosure,
workspace access authorisation verification means for determining an authorisation status of a prospective user as a function of user identification information provided by the prospective user and authorisation status information provided by the module access control means,
workspace access means for selectively permitting or preventing entry by a prospective user into the workspace enclosure, in dependence on said authorisation status information,
services connection means for connecting said each workspace module to power and communications networks at the installation site,
module lifting attachment point for supporting the weight of said each workspace module during moving or transporting of the said workspace module,
control communication means for communicating with the module access control means the module configuration control means and the module distribution means,
a plurality of configurable workspace facilities, and
workspace configuration means for receiving module configuration parameters for the prospective user from the module configuration control means, and configuring the workspace facilities of the workspace module according to the predetermined configuration profile for the said user;
wherein the module distribution means comprises
module distribution management means for monitoring status information of the installed workspace modules, for identifying sites where an installation action is required, and for communicating the required installation action to a distribution agent, and
transport means for loading and unloading one or more of the workspace modules by lifting, using the workspace module lifting attachment point (7, 8), and for securing said one or more workspace modules during transport;
wherein the module access control means comprises
user authorisation determining means for receiving user identification information and for determining an authorisation status of the said user, and
authorisation status storage means for storing authorisation status information of a plurality of users or a plurality of categories of user,
authorisation request response means for receiving, from an installed workspace module, user identification information of a prospective user for determining, as a function of authorisation status information stored in the authorisation status storage means, an authorisation status of the said prospective user and for transmitting the said authorisation status of the said prospective user to the said installed workspace module;
wherein the module configuration control means comprises
user configuration parameter determining means for receiving identification information of a user or for a category of user and workspace configuration preference information for the said user or the said category of the user and for determining a set of module configuration parameters as a function of the workspace configuration preference information for the said user or the said category of the user,
module configuration parameter storage means for storing workspace configuration parameter information of a plurality of users and/or of a plurality of categories of user,
module configuration parameter request response means for receiving, from module configuration control means of an installed workspace module, user identification or category information of a prospective user and for selecting, as a function of module configuration parameter information stored in the configuration parameter storage means, a set of configuration parameters for the said prospective user or the category of the said user and for communicating the said set of configuration parameters to the said installed workspace module.

The system is thus configurable at a module distribution level, with the distribution being controlled and optimised at one or more centralised computer systems, for example. It is also configurable at the user-level, so that each module can be configured to suit the requirements or the entitlements of each particular user. By automatically optimising the distribution of modules and the available workspace facilities, it is possible to provide a maximised level of availability of workspace facilities.

According to a variant of the system of the invention the workspace configuration means of each workspace module is adapted to configure the workspace facilities in dependence on the configuration parameters for a user or for a category of user and/or in dependence on the workspace facilities present in said each workspace module. In this way, it can be prevented, for example, that a workspace module is configured to offer a printing, scanning or video conference facility when the particular facility is not present, not working or otherwise unavailable.

The installation action may be, for example, one of installing, removing, replacing, cleaning or repairing a workspace module.

According to another variant of the invention, each workspace module is provided with attachment means for attaching to an adjacent or superposed workspace module. Modular stacking, nesting or otherwise fitting together of modules can greatly simplify and speed up the installation process for multiple modules at one site.

According to another variant of the invention, each workspace module comprises a power and/or communications bus for linking with the power and/or communications bus of an adjacent or superposed workspace module.

According to another variant of the system of the invention, the system management means comprises distribution optimisation means for determining usage patterns of workspace modules in different geographical locations and generating installation actions as a function of the usage patterns. As discussed above, the automatic optimisation of the module distribution can be used to ensure that the best use is made of the available modules.

According to another variant of the system of the invention, the workspace enclosure of each workspace module is provided with electromagnetic shielding for protecting wireless equipment inside the workspace enclosure from unauthorised wireless access from outside said each workspace module.

According to another variant of the system of the invention, the workspace facilities include a low power GSM base-station for providing secure GSM access only within the workspace enclosure.

By shielding the module and/or using a GSM base-station or a GSM relay station which only allows GSM access inside the module, secure communications can be ensured. An extra level of encryption may also be provided for extra secure communications.

According to another variant of the system of the invention, each workspace module is provided with occupancy detection means for communicating the occupancy status of said each workspace module to the module access control means. This information can be used by the system management means for re-allocating modules which are booked but not being used, or in the monitoring of the usage patterns described above.

According to another variant of the system of the invention, the system management means comprises a remotely accessible user interface for providing information about workspace modules installed in a predetermined geographical location, for reserving a workspace module and/or for submitting payment for using a workspace module. Thus, users may use a web-interface, for example, to find a nearby module with certain facilities, to see its availability, and/or to book a module for immediate or later use.

According to another variant of the system of the invention, the services connection means includes local electrical power generation means. In remote locations where power is not available, the module may be provided with its own power generation means.

It is also an object of the invention to provide a transportable workspace module for use in such a system according to the invention as described above, the transportable workspace module comprising
a workspace enclosure,
workspace access authorisation verification means for determining an authorisation status of a prospective user as a function of user identification information provided by the prospective user and authorisation status information provided by a module access control means of said system,
workspace access means for selectively permitting or preventing entry by a prospective user into the workspace enclosure, in dependence on said authorisation status information,
services connection means for connecting said workspace module to power and communications networks at the installation site,
module lifting attachment point for supporting the weight of the workspace module during moving or transporting of the module,
a plurality of configurable workspace facilities,
workspace configuration means for communicating said user identification information to a system management means of said system for receiving module configuration parameters for the prospective user from a module configuration control means, and configuring the workspace facilities of the workspace module according to the predetermined configuration profile for the said user, and
control communication means for communicating with the module access control means, the workspace configuration control means, the module distribution means, and/or the system management means of said system.

It is also an object of the invention to provide a method of providing workspace modules at a plurality of geographically-distributed installation sites such that each installed workspace module is accessible for use by a plurality of pre-authorised users the method comprising
providing a plurality of pre-fabricated workspace modules,
allocating and transporting each of at least a subset of said plurality of workspace modules to an installation site, and installing each allocated and transported workspace module at the said installation sites,
monitoring and controlling access to installed workspace modules,
determining an authorisation status of a prospective user as a function of user identification information provided by the prospective user and authorisation status information of a module access control database,
selectively permitting or preventing entry by a prospective user into the workspace enclosure of an installed workspace module, in dependence on said authorisation status,
connecting said each module to power and communications networks at the installation site of the installed workspace module,
monitoring status information of a plurality of installed workspace modules, identifying sites where an installation action is required, and communicating the required installation action to a distribution agent
loading and unloading one or more of the plurality of workspace modules using a workspace module lifting attachment point of each workspace module, and securing said one or more workspace modules during transport,
storing authorisation status information of a plurality of users or a plurality of categories of user in an authorisation status database,
receiving user identification information of a prospective user, and determining, as a function of authorisation status information retrieved from the authorisation status database, an authorisation status of the said prospective user and transmitting the said authorisation status of the said prospective user to the said installed workspace module.
configuring each installed workspace module, according to a predetermined configuration profile for a user for each usage of said each module by the said user
each workspace module comprising a plurality of configurable workspace facilities,
communicating said user identification information to a module configuration control means of the system, receiving module configuration parameters for the user from the module configuration control means of the system, and configuring the workspace facilities of the workspace module according to the predetermined configuration profile for the said user,
receiving identification information of the user or for a category of the user and workspace configuration preference information for the user or the category of the user and determining a set of module configuration parameters as a function of the workspace configuration preference information for the user or the category of user,
storing workspace configuration parameter information of a plurality of users and/or of a plurality of types of user in a workspace configuration parameter database,
receiving user identification or category information of a prospective user and determining, as a function of module configuration parameter information stored in the configuration parameter storage database, a set of configuration parameters for the said prospective user or the category of the said user and communicating the said set of configuration parameters to the said installed workspace module, and
configuring the workspace facilities of the said installed workspace module in accordance with said set of configuration parameters for the user.

According to a variant of the method invention, the method comprises: further adapting the set of configuration parameters to configure the workspace facilities in dependence on the workspace facilities available at said each workspace module.

According to another variant of the method invention, the method comprises: determining usage patterns and/or availability request information of workspace modules in different geographical locations, and dynamically generating installation actions as a function of the usage patterns.

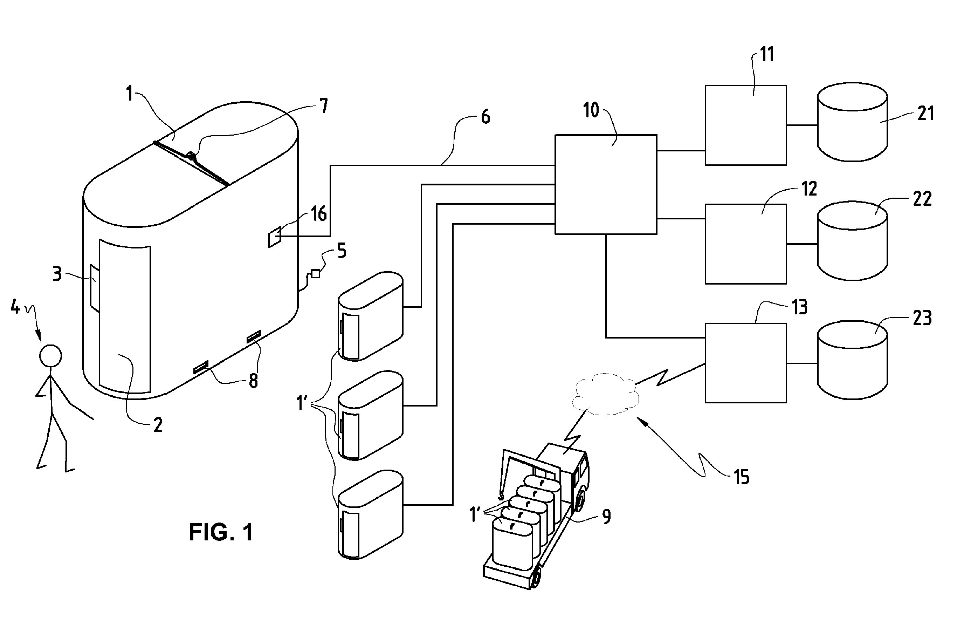

The invention will be described with reference to the accompanying drawing, figure 1, which shows a high-level schematic view of the system of the invention. System management means 10 is in communication (either via a wired network or any other standard communications technique, such as Wi-Fi, GSM etc), to many workspace modules 1, 1'. Module 1 shows an example of how a prefabricated, modular workspace module might appear. In this example, the unit 1 is essentially a secure enclosure containing such furnishings (chair, desk etc) as might be found in a standard office, together with equipment which might be required in an office: computer, printer, scanner, fax, telephone, GSM connection, Wi-Fi connection, videoconference facilities etc.

Note that the term "workspace" used in this description and the claims should be understood to include any kind of enclosed space in which work might be carried out - office, workshop, kitchen etc, and which can be prefabricated and transported, pre-furnished and pre-equipped, to any one of a multiplicity of sites.

"Workspace facilities" should also be understood to include any standard equipment, connections, machinery, furnishings, heating, air conditioning, lighting etc, which would be appropriate for such a workspace.

The term "site" should be understood to include public locations such as airports, railway stations, hotels, shopping centres etc and also locations with no, or less, public access, such as clubs, office buildings or private dwellings. The term may also include remote rural locations or mobile locations such as on board ships, trains or aeroplanes etc.

The example implementation shown in figure 1 is provided solely in order to aid an understanding of the invention, and the example should not be construed as limiting the scope of protection, which is defined in the appended claims.

The workspace module shown in figure 1 is provided with lifting attachment points such as loop or hook 7, and/or fork-lift or pump-truck locations 8 for easier transport and positioning on site. Access to the inside of the module is via door 2 and access control means 3, which may be a card reader or pin-code entry pad, and may be linked to the centralised access user authorisation and access control units 11, 21 of the system. The module is connected in a standardised manner to local power supply 5 and to communications link(s) 6 via communications control means 16, which may be a simple LAN interface or a combination of wireless, GSM and wired connections. Not shown in figure 1 are the workspace configuration elements of the module. Users may pre-register for access to the modules of the system, and they may choose, or be allocated, a certain authorisation status, and specify, or be allocated, a certain set of available configurations. It may be for example, that a user always carries his or her own laptop and mobile phone, in which case he or she will not wish to pay for the use of the module's computer and telephone. In this case, the configuration control elements 12, 22 of the system and the configuration means of the module ensure that the computer and the phone are disconnected or otherwise made unavailable for use by the particular user. Alternatively, it may be that a company pays for a bulk subscription to the modules, such that each of its employees is registered as belonging to the appropriate category of user. In this case, the configuration control elements 12, 22 of the system ensure that such an employee is automatically given access to those of the workspace facilities which have been specified for the particular category of users. In addition, in the latter case, the connection, set-up and security parameters, such as VPN access to company servers, email, FTP, or VoIP access to the telephone network, are automatically set up when the a user of the appropriate category provides sufficient identification or authorisation information to the access control means 3, as he or she enters the module.

In this way, employees of a particular company may enter the module and automatically be presented with their company's office environment, without the technical difficulties of setting up VPN access from a laptop, for example.

Distribution of the modules is carried out in unspectacular fashion, by lorry 9 for example, equipped with lifting gear and means, such as a pump truck, of moving the modules on site. However, the distribution of the modules is advantageously automated and optimised by means of centralised server(s) 13 and database(s) 23, to monitor the distribution, movements, status of, and demand for, the modules 1, 1' at different locations. When usage of and/or demand for modules at a particular site exceeds a predetermined level, for example, the system will automatically issue a request (a so-called installation action) for one or more extra modules to be installed at the site. If demand and/or usage falls, then modules will be re-deployed to more popular sites. Similarly, the integrity status (damage, cleanliness, proper function) of the modules and their contents (equipment, furnishings etc) are monitored, and an installation action is raised if such integrity status parameters fall outside predefined ranges. Installation actions are communicated to an installation agent 9, for example by radio or mobile phone 15 or other rapid communications means.

The automatic raising of installation actions is designed to ensure an optimum availability of the workspace modules in the predetermined geographical area of coverage of the system. Because the modules are pre-fabricated, pre-furnished and pre-equipped, the modules can be quickly delivered and connected. The configuration and verification of the correct installation and functioning of the communications, electronic components or other workspace facilities in the module can then be performed automatically and remotely by the system management means 10. Once confirmed as being correctly installed and functioning, the availability of the module is registered in the database 23 by the module distribution means 13. The module is then available for reserving, for example via a web interface or an iPhone app. which displays the available modules to a user seeking a private and appropriately configured working environment.

## Claims

1. System for providing workspace modules (1, 1') at a plurality of geographically-distributed installation sites such that each installed workspace module (1, 1') is accessible for use by a plurality of pre-authorised users the system comprising
a plurality of pre-fabricated, transportable workspace modules (1, 1'),
module distribution means (13, 23, 15, 9) for allocating and transporting each of at least a subset of said plurality of workspace modules (1, 1') to an installation site, and installing each allocated and transported workspace module (1, 1') at the said installation site,
module access control means (11, 21) for monitoring and controlling access to installed workspace modules (1, 1'),
module configuration control means (12, 22) for configuring each installed workspace module (1, 1'), according to a predetermined configuration profile for a user for each usage of said each module by the said user (4), and
system management means (10) for controlling the operation of the module distribution means (13, 23, 15, 9), the module access control means (11, 21) and the module configuration control means (12, 22);
wherein each workspace module (1, 1') comprises
a workspace enclosure,
workspace access authorisation verification means (3) for determining an authorisation status of a prospective user (4) as a function of user identification information provided by the prospective user (4) and authorisation status information provided by the module access control means (11,21),
workspace access means (2) for selectively permitting or preventing entry by a prospective user (4) into the workspace enclosure, in dependence on said authorisation status information,
services connection means (5, 6) for connecting said each workspace module (1, 1') to power and communications networks at the installation site,
module lifting attachment point (7, 8) for supporting the weight of said each workspace module (1, 1') during moving or transporting of the said workspace module (1, 1'),
control communication means (16) for communicating with the module access control means (11, 21) the module configuration control means (12, 22) and the module distribution means (13, 23),
a plurality of configurable workspace facilities, and
workspace configuration means for receiving module configuration parameters for the prospective user (4) from the module configuration control means (12, 22), and configuring the workspace facilities of the workspace module (1, 1') according to the predetermined configuration profile for the said user (4);
wherein the module distribution means (13, 23, 15, 9) comprises
module distribution management means (13) for monitoring status information of the installed workspace modules (1, 1'), for identifying sites where an installation action is required, and for communicating the required installation action to a distribution agent (9), and
transport means (9) for loading and unloading one or more of the workspace modules by lifting, using the workspace module lifting attachment point (7, 8), and for securing said one or more workspace modules (1') during transport;
wherein the module access control means (11, 21) comprises
user authorisation determining means (11) for receiving user identification information and for determining an authorisation status of the said user (4), and
authorisation status storage means (21) for storing authorisation status information of a plurality of users (4) or a plurality of categories of user (4),
authorisation request response means (11) for receiving, from an installed workspace module (1, 1'), user identification information of a prospective user (4), for determining, as a function of authorisation status information stored in the authorisation status storage means, an authorisation status of the said prospective user (4), and for transmitting the said authorisation status of the said prospective user (4) to the said installed workspace module (1, 1');
wherein the module configuration control means (12, 22) comprises
user configuration parameter determining means (12) for receiving identification information of a user (4) or for a category of user (4), and workspace configuration preference information for the said user (4) or the said category of the user (4), and for determining a set of module configuration parameters as a function of the workspace configuration preference information for the said user (4) or the said category of the user (4),
module configuration parameter storage means (22) for storing workspace configuration parameter information of a plurality of users (4) and/or of a plurality of categories of user (4),
module configuration parameter request response means (12) for receiving, from module configuration control means (12, 22) of an installed workspace module (1, 1'), user identification or category information of a prospective user (4), and for selecting, as a function of module configuration parameter information stored in the configuration parameter storage means (22), a set of configuration parameters for the said prospective user (4) or the category of the said user (4), and for communicating the said set of configuration parameters to the said installed workspace module (1, 1').

2. System according to claim 1, in which the workspace configuration means of each workspace module (1, 1') is adapted to configure the workspace facilities in dependence on the configuration parameters for a user (4) or for a category of user (4), and/or in dependence on the workspace facilities present in said each workspace module (1, 1').

3. System according to one of the preceding claims, in which the installation action is one of installing, removing, replacing, cleaning or repairing a workspace module (1, '1).

4. System according to one of the preceding claims, in which each workspace module (1, 1') is provided with attachment means for attaching to an adjacent or superposed workspace module (1, 1').

5. System according to one of the preceding claims, in which each workspace module (1, 1') comprises a power and/or communications bus for linking with the power and/or communications bus of an adjacent or superposed workspace module (1, 1').

6. System according to one of the preceding claims, in which the system management means (10) comprises distribution optimisation means for determining usage patterns of workspace modules (1, 1') in different geographical locations and generating installation actions as a function of the usage patterns.

7. System according to one of the preceding claims, in which the workspace enclosure of each workspace module (1, 1') is provided with electromagnetic shielding for protecting wireless equipment inside the workspace enclosure from unauthorised wireless access from outside said each workspace module (1, 1').

8. System according to claim 7, in which the workspace facilities include a low power GSM base-station for providing secure GSM access only within the workspace enclosure.

9. System according to one of the preceding claims, in which each workspace module (1, 1') is provided with occupancy detection means for communicating the occupancy status of said each workspace module (1, 1') to the module access control means (11, 21).

10. System according to one of the preceding claims, in which the system management means (10) comprises a remotely accessible user interface for providing information about workspace modules (1, 1') installed in a predetermined geographical location, for reserving a workspace module (1, 1') and/or for submitting payment for using a workspace module (1, 1').

11. System according to one of the preceding claims, in which the services connection means (5, 6) includes local electrical power generation means.

12. Transportable workspace module (1, 1') for use in a system according to one of the preceding claims, the workspace module (1, 1') comprising
a workspace enclosure,
workspace access authorisation verification means (3) for determining an authorisation status of a prospective user (4) as a function of user identification information provided by the prospective user (4) and authorisation status information provided by a module access control means (11, 21) of said system,
workspace access means (2) for selectively permitting or preventing entry by a prospective user (4) into the workspace enclosure, in dependence on said authorisation status information,
services connection means (5, 6) for connecting said workspace module (1, 1') to power and communications networks at the installation site,
module lifting attachment point (7, 8) for supporting the weight of the workspace module (1, 1') during moving or transporting of the module (1, 1'),
a plurality of configurable workspace facilities,
workspace configuration means for communicating said user identification information to a system management means (10) of said system for receiving module configuration parameters for the prospective user (4) from a module configuration control means (12, 22), and configuring the workspace facilities of the workspace module (1, 1') according to the predetermined configuration profile for the said user (4), and
control communication means (16) for communicating with the module access control means (11, 21), the workspace configuration control means (12, 22), the module distribution means (13, 23), and/or the system management means (10) of said system.

13. Method of providing workspace modules (1, 1') at a plurality of geographically-distributed installation sites such that each installed workspace module (1, 1') is accessible for use by a plurality of pre-authorised users (4), the method comprising
providing a plurality of pre-fabricated workspace modules (1, 1'),
allocating and transporting each of at least a subset of said plurality of workspace modules (1, 1') to an installation site, and installing each allocated and transported workspace module (1, 1') at the said installation sites,
monitoring and controlling access to installed workspace modules (1, 1')
determining an authorisation status of a prospective user (4) as a function of user identification information provided by the prospective user (4) and authorisation status information of a module access control database (11, 21),
selectively permitting or preventing entry by a prospective user (4) into the workspace enclosure of an installed workspace module (1, 1'), in dependence on said authorisation status,
connecting said each module (1, 1') to power and communications networks at the installation site of the installed workspace module (1, 1'),
monitoring status information of a plurality of installed workspace modules (1, 1'), identifying sites where an installation action is required, and communicating the required installation action to a distribution agent (9),
loading and unloading one or more of the plurality of workspace modules (1, 1') using a workspace module lifting attachment point of each workspace module (1, 1'), and securing said one or more workspace modules (1, 1') during transport,
storing authorisation status information of a plurality of users (4) or a plurality of categories of user (4) in an authorisation status database (21),
receiving user identification information of a prospective user, and determining, as a function of authorisation status information retrieved from the authorisation status database (21), an authorisation status of the said prospective user (4), and transmitting the said authorisation status of the said prospective user to the said installed workspace module (1, 1').
configuring each installed workspace module (1, 1'), according to a predetermined configuration profile for a user (4), for each usage of said each module by the said user (4),
each workspace module (1, 1') comprising a plurality of configurable workspace facilities,
communicating said user identification information to a module configuration control means (12, 22) of the system, receiving module configuration parameters for the user from the module configuration control means (12, 22) of the system, and configuring the workspace facilities of the workspace module (1, 1') according to the predetermined configuration profile for the said user (4),
receiving identification information of the user (4), or for a category of the user (4), and workspace configuration preference information for the user (4) or the category of the user (4), and determining a set of module configuration parameters as a function of the workspace configuration preference information for the user (4) or the category of user (4),
storing workspace configuration parameter information of a plurality of users (4) and/or of a plurality of types of user (4) in a workspace configuration parameter database (22),
receiving user identification or category information of a prospective user (4), and determining, as a function of module configuration parameter information stored in the configuration parameter storage database (22), a set of configuration parameters for the said prospective user (4) or the category of the said user (4), and communicating the said set of configuration parameters to the said installed workspace module (1, 1'), and
configuring the workspace facilities of the said installed workspace module (1, 1') in accordance with said set of configuration parameters for the user (4).

14. Method according to claim 13, further comprising
further adapting the set of configuration parameters to configure the workspace facilities in dependence on the workspace facilities available at said each workspace module (1, 1').

15. Method according to one of claims 13 or 14, comprising
determining usage patterns and/or availability request information of workspace modules (1, 1') in different geographical locations, and
dynamically generating installation actions as a function of the usage patterns.
